# EUROPÄISCHE PATENTSCHRIFT

(11) **EP 3 628 573 B1**
(45) Veröffentlichungstag und Bekanntmachung des Hinweises auf die Patenterteilung: **22.09.2021**
(21) Anmeldenummer: 19199965.5
(22) Anmeldetag: 26.09.2019
(51) Int. Cl.: B60J 5/04, B60J 5/00, B62D 25/10, B60L 8/00, B62D 25/06, B62D 27/02, B62D 35/00

(54) **KAROSSERIEBAUTEIL FÜR EIN KRAFTFAHRZEUG**
BODY COMPONENT FOR A MOTOR VEHICLE
COMPOSANT DE CARROSSERIE POUR UN VÉHICULE AUTOMOBILE

(30) Priorität: 28.09.2018 DE 102018216817
(43) Veröffentlichungstag der Anmeldung: 01.04.2020
(73) Patentinhaber: Audi AG, 85045 Ingolstadt (DE)
(72) Erfinder: BRYMERSKI, Wojciech, 70806 Kornwestheim (DE); KASPERZAK, André, 74626 Bretzfeld (DE); OCAK, Ismail, 74360 Ilsfeld (DE)

(56) Entgegenhaltungen:
- EP-A1- 2 487 091
- WO-A1-2010/017847
- WO-A1-2018/171327
- CN-U- 203 951 400
- DE-A1- 3 835 560
- KR-A- 20100 118 472

## Beschreibung

Die Erfindung betrifft ein Karosseriebauteil für ein Kraftfahrzeug, umfassend ein Innenteil sowie ein mit den Innenteil verbundenes Außenteil, das in der Montagestellung eine Außenfläche des Kraftfahrzeugs bildet.

Zunehmend werden Kraftfahrzeuge mit elektrischen Antrieben versehen, die naturgemäß immer wieder zu laden sind. Eine Möglichkeit hierzu besteht darin, das Fahrzeug außenseitig mit Solarzellen zu bestücken, die bei Lichteinfall einen Strom erzeugen, der zum Laden des Energiespeichers verwendet werden kann. Hierbei ist es bekannt, die Außenfläche des Kraftfahrzeugs, also die Karosserie respektive die entsprechenden, diese bildenden Karosseriebauteile zum Teil unmittelbar mit den Solarzellen zu bekleben und mit einer Schutzfolie abzudecken. Dies ist jedoch insoweit nachteilig, als dieses Bekleben relativ komplizier und aufwändig ist, da die Verklebung äußerst exakt erfolgen muss, was bei den gegebenen Außenflächengeometrien nicht ohne Weiteres möglich ist. Darüber hinaus lässt sich auch nur ein bedingter Schutz der Solarzellen gegen äußere Einflüsse, insbesondere Krafteinflüsse erreichen.

Alternativ ist es bekannt, ein Glasschiebedach mit Solarzellen zu bestücken. Bei dem Glasschiebedach handelt es sich um ein Bauteil aus Sicherheitsglas, was es ermöglicht, bei einem mehrschichtigen Aufbau in einer Zwischenebene eine Solarzellenebene einzubringen, die dann ober- und unterseitig über entsprechende Glasebenen eingefasst und geschützt ist. Es handelt sich bei diesem Solarschiebedach jedoch um ein Spezialbauteil, das, nachdem es auch noch beweglich ist, in seinem Aufbau und seiner Konstruktion komplex ist. Darüber hinaus ist ein solches Solarschiebedach nur wenig verbreitet, da es keine Standardausstattung bei modernen Kraftfahrzeugen ist.

Die WO 2010/017847 A1 offenbart ein Karosseriebauteil gemäß dem Oberbegriff des Anspruchs 1.

Der Erfindung liegt damit das Problem zugrunde, eine Möglichkeit für eine verbesserte Integration eines Photovoltaikmoduls in ein Kraftfahrzeug anzugeben.

Zur Lösung dieses Problems ist erfindungsgemäß ein Karosseriebauteil für ein Kraftfahrzeug vorgesehen, umfassend ein Innenteil sowie ein mit dem Innenteil verbundenes Außenteil, das in der Montagestellung eine Außenfläche des Kraftfahrzeugs bildet, wobei sich dieses Karosseriebauteil dadurch auszeichnet, dass das Außenteil einen Außenteilrahmen mit wenigstens einer großflächigen Öffnung und ein in diese eingesetztes, sie ausfüllendes und fest mit dem Außenteilrahmen verbundenes Photovoltaikmodul aufweist.

Die Erfindung schlägt vor, das Photovoltaikmodul als unmittelbares Element eines Karosseriebauteils einzusetzen bzw. im Karosseriebauteil fest zu verbauen. Ein solchen Karosseriebauteil besteht üblicherweise aus einem Innenteil, das die wesentliche Tragfunktion übernimmt und beispielsweise rahmen- oder gitterartig ausgeführt ist. Vorgesehen ist des Weiteren ein Außenteil, das die eigentliche Außenfläche des Karosseriebauteils bildet und das fest mit dem Innenteil verbunden ist. Zwischen Innen- und Außenteil können gegebenenfalls weitere Verstärkungsteile montiert werden. Erfindungsgemäß wird nun das Außenteil zumindest zweiteilig ausgeführt, bestehend aus einem Außenteilrahmen und dem Photovoltaikmodul. Der Außenteilrahmen weist wenigstens eine möglichst großflächige Ausnehmung oder Öffnung auf, wobei über die Fläche des Außenteilrahmens auch mehrere Öffnungen ausgebildet sein können. In diese oder jede Öffnung wird erfindungsgemäß ein vorgefertigtes Photovoltaikmodul eingesetzt, das die Öffnung vollständig ausfüllt und das fest mit dem Außenteilrahmen verbunden ist. Das Photovoltaikmodul bildet daher zusammen mit dem Außenteilrahmen das Außenteil und die Außenfläche des Karosseriebauteils. Es ist fest integriert Bestandteil des Karosseriebauteils und eines der zentralen Elemente. Auf diese Weise ist eine einfache Integration eines Photovoltaikmoduls - von denen wie beschrieben an dem Karosseriebauteil auch mehrere vorgesehen werden können, wenn mehrere Öffnungen ausgebildet werden - möglich. Da das Karosseriebauteil ein zwingend vorzusehendes Bauteil für die Fahrzeugkarosse ist, ist eine einfache Integration des Photovoltaikmoduls am Fahrzeug möglich und damit die Ausrüstung quasi standardisiert möglich. Dies insbesondere, als die Montage des Photovoltaikmoduls im Karosseriebauteil ohne weiteres in den üblichen Produktions- bzw. Zusammenbauablauf integriert werden kann. Denn es ist lediglich erforderlich, einerseits bei der Herstellung des üblicherweise aus einem Blechbauteil gefertigten Außenteils zur Bildung des Außenteilrahmens in einem entsprechenden Stanzvorgang die eine oder die mehreren Öffnungen auszubilden, was ohne weiteres im Rahmen des eigentlichen Umformvorgangs, in dem eine Blechtafel der Form und Geometrie des gewünschten Außenteils entsprechend umgeformt wird, erfolgen kann. Dieser Außenteilrahmen wird sodann in der Montagestrecke an die entsprechende Montagestelle zugeführt, zusammen mit dem Innenteil, etwaigen Verstärkungsteilen und dem bevorzugt ebenfalls vorgefertigten Photovoltaikmodul, das nun an der Montagestation innerhalb des Montagebands mit dem Außenteilrahmen verbunden wird und demzufolge das fertige Außenteil konfiguriert wird. Das heißt, dass die Integration des Photovoltaikmoduls ohne weiteres in den üblichen Zusammenbauvorgang integriert werden kann. Selbst eine Montage des Photovoltaikmoduls aus vorgefertigten bzw. vorkonfigurierten Teilen am Band vor dessen Integration am Außenteilrahmen ist denkbar.

Das Photovoltaikmodul bildet wie beschrieben einen festen Bestandteil des Außenteils und damit einen festen, tragenden Bestandteil des Karosseriebauteils. Aus diesem Grund kann es entsprechend stabil dimensioniert werden, beispielsweise bestehend aus einer Solarzellenebene, die zwischen entsprechend stabilen Trägerebenen eingebunden ist, so dass einerseits die Solarzellen vollständig geschützt sind, andererseits aber auch eine extreme Stabilität des Photovoltaikmoduls, ähnlich wie bei einem Glasschiebedach, gegeben ist.

Die feste Verbindung des Photovoltaikmoduls mit dem Außenteilrahmen erfolgt bevorzugt über eine Klebeverbindung. Diese kann automatisiert erzeugt werden, indem mit einem Roboter automatisch eine Klebeschnur im Verbindungsbereich auf den Außenteilrahmen und/oder das Photovoltaikmodul gelegt wird, wonach die beiden Bauteile zusammengefügt und verklebt werden. Alternativ dazu ist es auch denkbar, beide unter Verwendung geeigneter Befestigungselemente aneinander zu fixieren, beispielsweise zu verschrauben, was mitunter ebenfalls automatisiert erfolgen kann.

Um den Außenteilrahmen und das Photovoltaikmodul auf einfache Weise aneinander befestigen zu können, sieht eine zweckmäßige Weiterbildung der Erfindung vor, dass beide randseitig formschlüssig ineinander greifen. Es ergibt sich also ein randseitiger Formschluss respektive Überlapp, im Bereich dessen auf einfache Weise die Teileverbindung erfolgen kann. Bevorzugt weist hierzu das Photovoltaikmodul einen randseitig umlaufenden, zur Außenfläche hin offenen Falz auf, in den der die Öffnung begrenzende Außenteilrahmenrand eingreift. Im Randbereich überlappen beide also und liegen flächig aneinander, wobei in diesem Überlappbereich beispielsweise die Klebeverbindung vorgesehen werden kann.

Eine zweckmäßige Weiterbildung der Erfindung sieht vor, dass die Außenfläche des Außenrahmenteils und die Außenfläche des Photovoltaikmoduls bündig ineinander übergehen. Die Öffnung ist in ihrer Größe und Geometrie so bemessen, dass sie so exakt wie möglich der Größe und Geometrie des Photovoltaikmoduls entspricht. Darüber hinaus ist die Befestigung der beiden Bauteile aneinander so gewählt, dass die Außenflächen bündig ineinander übergehen, so dass sich keine Kante oder Stufe im Übergangsbereich an der Außenfläche ergibt. Dadurch, dass die Öffnung und das Photovoltaikmodul einander großen- und geometriemäßig entsprechen, ergibt sich auch nur ein minimaler umlaufender Spalt, der beispielsweise mit dem Klebemittel im Rahmen der Montage bereits abgedichtet werden kann, alternativ kann in diesem Bereich bei Bedarf ein zusätzliches fluides, aushärtendes Dichtmittel eingebracht werden.

Bei dem Karosseriebauteil kann es sich beispielsweise um eine Front- oder Heckklappe handeln. Denkbar ist auch die Ausführung als Tür oder als Dachbauteil, mithin also als großflächige Karosserieteile, die die Integration eines entsprechenden großflächigen Photovoltaikmoduls ermöglichen. Denkbar ist aber auch die Ausführung als Kotflügel oder als Spoiler, wobei diese Aufzählung nicht abschließend ist.

Neben dem Karosseriebauteil betrifft die Erfindung ferner ein Kraftfahrzeug, umfassend wenigstens ein derartiges Karosseriebauteil.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung als Explosionsansicht eines erfindungsgemäßen Karosseriebauteils,
- Fig. 2: das Karosseriebauteil aus Fig. 1 in montierter Form, und
- Fig. 3: eine vergrößerte Teilansicht des Karosseriebauteils aus Fig. 2.

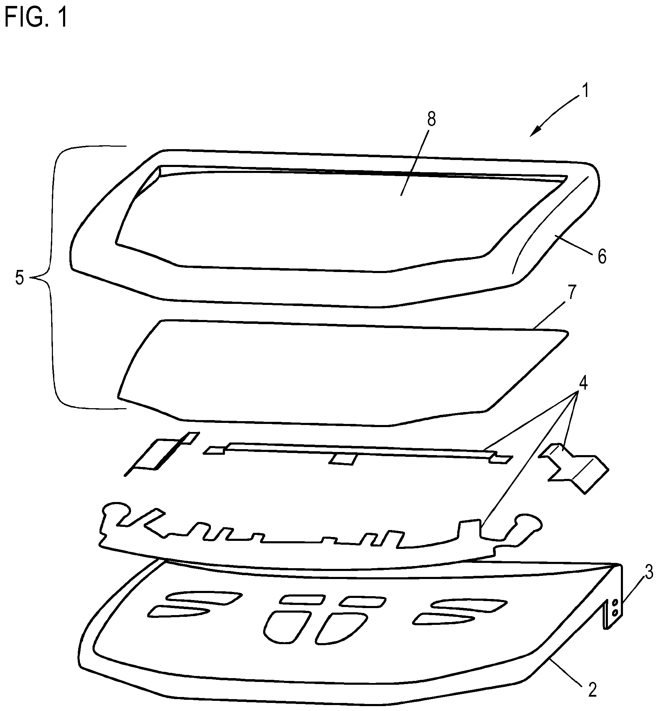

Fig. 1 zeigt in einer Explosionsdarstellung ein erfindungsgemäßes Karosseriebauteil 1 in Form einer Frontklappe eines Kraftfahrzeugs, also einer Motorhaube. Das Karosseriebauteil 1 besteht aus einem Innenteil 2, das im Vorliegenden eine Art Gitterstruktur aufweist, und an dem im gezeigten Beispiel bereits beidseitig Scharniere 3 zur Schwenkbefestigung an der Karosserie vorgesehen sind. Bei dem Innenteil 2 handelt es sich üblicherweise um ein Metallbauteil, üblicherweise aus Aluminium, jedoch kann es auch aus anderen Materialien, insbesondere Kompositmaterialien oder dergleichen bestehen.

Vorgesehen sind des Weiteren diverse Verstärkungsteile 4, die im Inneren des montierten Karosseriebauteils 1 aufgenommen sind und der spezifischen Aussteifung oder Verstärkung desselben dienen.

Gezeigt ist des Weiteren ein Außenteil 5, bestehend aus zwei separaten Bauteilen, nämlich einem Außenteilrahmen 6, ebenfalls bevorzugt ein Metall- bzw. Aluminiumbauteil oder ein Komposit- oder Kunststoffbauteil oder dergleichen, sowie einem Photovoltaikmodul 7. Das Außenrahmenteil 6 weist im gezeigten Beispiel eine großflächige Öffnung 8, also einen entsprechenden Ausschnitt auf, so dass lediglich noch eine umlaufende, schmale Rahmenstruktur verbleibt. In diese Öffnung wird, worauf Nachfolgend noch eingegangen wird, das Photovoltaikmodul 7 eingesetzt. Die Größe und Form respektive Geometrie der Öffnung 8 und die Größe bzw. Geometrie des Photovoltaikmoduls 7 sind so aufeinander abgestimmt, dass das Photovoltaikmodul 7 mit möglichst minimalem Spalt in das Außenrahmenteil 6 respektive die Öffnung 8 eingesetzt werden kann.

Die Montage des Karosseriebauteils 1 kann unmittelbar am Band erfolgen, das heißt, dass an die Montageposition einerseits das Innenteil sowie die Verstärkungsteile und gegebenenfalls weitere, nicht näher gezeigte Elemente geliefert werden, andererseits aber auch das Photovoltaikmodul 7 und der Außenteilrahmen 8, die dann vor Ort am Band miteinander verbunden werden, wonach das gefertigte Außenteil 5 mit den anderen Komponenten (Innenteil 2, Verstärkungsteile 4 etc.) verbunden werden.

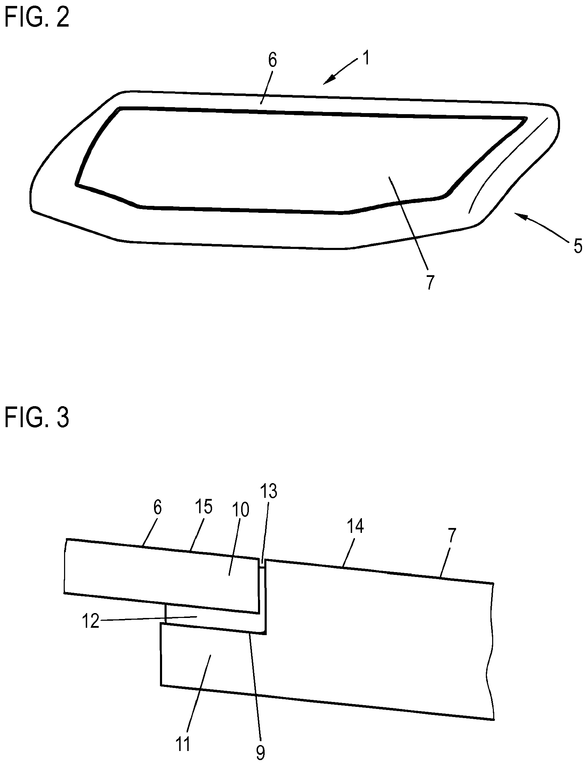

Fig. 2 zeigt das fertig montierte Karosseriebauteil 1, also die Frontklappe, wobei in dieser Ansicht, da es sich um ein relativ flaches Bauteil handelt, letztlich nur das Außenbauteil 5 mit dem Außenbauteilrahmen 6 und dem in die Öffnung 8 eingesetzten Photovoltaikmodul 7 zu sehen ist.

Der in Fig. 3 gezeigten vergrößerten Teilansicht des Verbindungsbereichs des Außenteilrahmens 6 mit dem Photovoltaikmodul 7 ist zu entnehmen, dass das Photovoltaikmodul, das beispielsweise aus einer oberen und einer unteren Sicherheitsglasscheibe oder Polymerscheibe oder Ähnlichem und einer dazwischen eingelegten Solarzellenebene besteht, einen randseitig umlaufenden Falz 9 aufweist. In diesen Falz 9 greift der Rand 10 des Außenteils 6 ein, wie Fig. 3 anschaulich zeigt. Das heißt, dass der Außenteilrand 10 und der Rand 11 des Photovoltaikmoduls 7 miteinander überlappen. Dies ermöglicht es, in diesem Bereich beispielsweise eine Klebeverbindung 12 vorzusehen, mithin also die beiden Bauteile fest miteinander zu verkleben. Hierzu kann im Rahmen des Fügens des Photovoltaikmoduls 7 mit dem Außenteilrahmen 6 mittels eines Roboters eine Klebemittelschnur auf bzw. in den Falz 9 gelegt werden, die beim Zusammendrücken des Photovoltaikmoduls 7 und des Außenteilrahmens 6 verdrückt wird und einerseits die feste Klebeverbindung realisiert, andererseits aber auch einen sich zwischen dem Photovoltaikmodul 7 und dem Außenteilrahmen 6 ergebenden, minimalen umlaufenden Spalt 13 abdichtet.

Wie Fig. 3 ferner zeigt, ist die Tiefe des Falzes 9 so bemessen, dass die Außenfläche 14 des Photovoltaikmoduls 7 und die Außenfläche 15 des Außenrahmenbauteils 6 bündig ineinander übergehen, so dass sich in diesem Bereich also keine Kante oder Stufe ergibt. Die Auslegung der Falztiefe erfolgt dabei natürlich unter Berücksichtigung der Dicke der sich ergebenden Klebeverbindung 12.

Das erfindungsgemäße Karosseriebauteil bietet eine Reihe von Vorteilen. Zum einen ermöglicht es die einfache Integration eines oder mehrerer Photovoltaikmodule in ein Karosseriebauteil und damit am Kraftfahrzeug, und zwar im Rahmen der üblichen Bandmontage, das heißt, dass die Montage in den bestehenden Zusammenbauablauf ohne weiteres integriert werden kann. Erforderlich ist lediglich eine entsprechende Werkzeugausgestaltung zur Ausbildung der Öffnung 8 am Außenrahmenteil 6 und gegebenenfalls eine weitere Klebevorrichtung. Dadurch, dass demzufolge auf einfache Weise derartige Karosseriebauteile mit einem Photovoltaikmodul ausgerüstet werden können, ist es möglich, diese auch quasi standardisiert bei Fahrzeugen mit teil- oder vollelektrischem Antrieb zu verbauen. Da das Photovoltaikmodul 7 des Weiteren einen zentralen Teil des Außenteils 5 bildet und demzufolge entsprechend stabil und steif ist, können hiermit auch ohne weiteres etwaige Anforderungen an einen Fußgängerschutz oder sonstige mechanische Anforderungen erfüllt werden.

Abschließend der Hinweis, dass die Erfindung nicht auf das gezeigte Ausführungsbeispiel einer Frontklappe beschränkt ist. Bei dem Karosseriebauteil kann es sich selbstverständlich auch beispielsweise um eine Heckklappe oder um eine Tür oder ein Dachbauteil oder dergleichen handeln.

## Patentansprüche

1. Karosseriebauteil für ein Kraftfahrzeug, umfassend ein Innenteil (2) sowie ein mit dem Innenteil verbundenes Außenteil (5), das in der Montagestellung eine Außenfläche des Kraftfahrzeugs bildet,
**dadurch gekennzeichnet,**
**dass** das Außenteil (5) einen Außenteilrahmen (6) mit wenigstens einer großflächigen Öffnung (8) und ein in diese eingesetztes, sie ausfüllendes und fest mit dem Außenteilrahmen (6) verbundenes Photovoltaikmodul (7) aufweist.

2. Karosseriebauteil nach Anspruch 1,
**dadurch gekennzeichnet,**
**dass** das Photovoltaikmodul (7) über eine Klebeverbindung (12) oder über Befestigungselemente mit dem Außenteilrahmen (6) verbunden ist.

3. Karosseriebauteil nach Anspruch 1 oder 2,
**dadurch gekennzeichnet,**
**dass** das der Außenteilrahmen (6) und das Photovoltaikmodul (7) randseitig formschlüssig ineinander greifen.

4. Karosseriebauteil nach Anspruch 3,
**dadurch gekennzeichnet,**
**dass** am Photovoltaikmodul (7) ein randseitig umlaufender, zur Außenfläche hin offener Falz (9) vorgesehen ist, in den der Außenteilrahmenrand (10) eingreift.

5. Karosseriebauteil nach einem der vorangehenden Ansprüche,
**dadurch gekennzeichnet,**
**dass** die Außenfläche (15) des Außenrahmenteils (6) und die Außenfläche (14) des Photovoltaikmoduls (7) bündig ineinander übergehen.

6. Karosseriebauteil nach einem der vorangehenden Ansprüche,
**dadurch gekennzeichnet,**
**dass** es eine Front- oder Heckklappe, eine Tür, ein Dachbauteil, ein Kotflügel oder ein Spoiler ist.

7. Kraftfahrzeug, umfassend wenigstens ein Karosseriebauteil (1) nach einem der vorangehenden Ansprüche.

## Claims

1. Body component for a motor vehicle, comprising an inner part (2) and an outer part (5) connected to the inner part, which outer part, in the installation position, forms an outer surface of the motor vehicle,
**characterised in**
**that** the outer part (5) has an outer part frame (6) having at least one extensive opening (8) and a photovoltaic module (7) which is set into said opening and fills it completely and is connected securely with the outer part frame (6).

2. Body component according to claim 1,
**characterised in**
**that** the photovoltaic module (7) is connected by way of an adhesive connection (12) or by way of fastening elements with the outer part frame (6).

3. Body component according to claim 1 or 2,
**characterised in**
**that** the outer part frame (6) and the photovoltaic module (7) engage form-fittingly in one another at the edge.

4. Body component according to claim 3,
**characterised in**
**that** on the photovoltaic module (7) is provided a rebate (9) which encircles at the edge and is open towards the outer surface, into which rebate the outer part frame edge (10) engages.

5. Body component according to any of the preceding claims,
**characterised in**
**that** the outer surface (15) of the outer frame part (6) and the outer surface (14) of the photovoltaic module (7) transition flush into one another.

6. Body component according to any of the preceding claims,
**characterised in**
**that** it is a bonnet or tailgate, a door, a roof component, a wing or a spoiler.

7. Motor vehicle comprising at least one body component (1) according to any of the preceding claims.

## Revendications

1. Composant de carrosserie pour un véhicule automobile, comprenant une partie intérieure (2) ainsi qu'une partie extérieure (5) connectée à la partie intérieure, qui forme une surface extérieure du véhicule automobile en position de montage,
**caractérisé en ce**
**que** la partie extérieure (5) présente un cadre de partie extérieure (6) avec au moins une ouverture à grande surface (8) et un module photovoltaïque (7) inséré dans celle-ci, la remplissant et connecté fermement au cadre de partie extérieure (6).

2. Composant de carrosserie selon la revendication 1,
**caractérisé en ce**
**que** le module photovoltaïque (7) est connecté au cadre de partie extérieure (6) par une connexion adhésive (12) ou par des éléments de fixation.

3. Composant de carrosserie selon la revendication 1 ou 2,
**caractérisé en ce**
**que** le cadre de partie extérieure (6) et le module photovoltaïque (7) s'emboîtent l'un dans l'autre au niveau des bords par complémentarité de forme.

4. Composant de carrosserie selon la revendication 3,
**caractérisé en ce**
**qu'**une feuillure (9) périphérique ouverte vers la surface extérieure sur le module photovoltaïque (7) est prévue, dans laquelle le bord de cadre de partie extérieure (10) s'engage.

5. Composant de carrosserie selon l'une quelconque des revendications précédentes,
**caractérisé en ce**
**que** la surface extérieure (15) du cadre de partie extérieure (6) et la surface extérieure (14) du module photovoltaïque (7) affleurent l'une à l'autre.

6. Composant de carrosserie selon l'une quelconque des revendications précédentes,
**caractérisé en ce**
**qu'**il s'agit d'un hayon avant ou arrière, d'une porte, d'un composant de toit, d'un passage de roue ou d'un spoiler.

7. Véhicule automobile comprenant au moins un composant de carrosserie (1) selon l'une quelconque des revendications précédentes.
